# EUROPEAN PATENT APPLICATION

(11) **EP 0 852 420 A1**
(43) Date of publication of application: **08.07.1998**
(21) Application number: 98300079.5
(22) Date of filing: 07.01.1998
(51) Int. Cl.: H02K 1/27

(54) **Rotor**

(30) Priority: 07.01.1997 JP 12071/97
(71) Applicant: OPPAMA INDUSTRY CO., LTD., Yokosuka-shi, Kanagawa-ken (JP)
(72) Inventor: Iwata, Masao, Yokosuka-shi, Kenagawa-ken (JP); Kitamura, Yoshiki, Yokosuka-shi, Kenagawa-ken (JP); Otake, Shigeru, Yokosuka-shi, Kenagawa-ken (JP)
(74) Representative: Leale, Robin George

(57) **Abstract**

A rotor core (1) is provided with a pole piece portion (4) holding a magnet (13) and a balance weight portion (5), and a hub fitting hole (2) which receives a metal hub (6) having a tapered hole (13) and a part fitting portion (10). The rotor core is coated with synthetic resin (14).

## Description

This invention relates to a rotor, for example of a magneto or the like to be used in ignition equipment of an internal combustion engine, and more particularly to such a rotor the core of which has a metal hub to be used for fitting the rotor to a rotating shaft such as a crankshaft.

A conventional rotor of a rotating device such as a magneto comprises a rotor core incorporating a pole piece portion with a magnet and a balance weight, into which a hub is integrated. Such a rotor is constructed by injecting molten aluminum into a die in which the said rotor core is held, whereby a hub made from die cast aluminium is integrally molded into said rotor core.

Such a rotor provided with a hub made of die cast aluminum has a tapered hole in the hub for attachment to a rotating shaft such as a crankshaft. The length of the tapered hole relative to thickness of the rotor core, and/or the position of the taper in the axial direction, are chosen so that desired strength is obtained. Moreover, as said hub is an aluminum die casting, it can be provided with a tubular joining portion at one end, by means of a cutting process, to attach a cooling fan for example, or a screw hole may be formed in the hub for attaching various parts such as a ratchet member for a recoil starter. Therefore, this hub must be capable of firmly supporting such a heavy cooling fan, or a ratchet member which receives a large load. However, because such a conventional rotor comprises a laminated core and a die cast aluminum hub in an integrated form and furthermore because the casting of the hub is carried out after a magnet has been inserted in the pole piece portion, the rotor core, when the hub is molded, is made heavier in weight and the molding of the hub becomes troublesome, causing low productivity and high casting cost. Additionally there has been a problem that, due to a decrease in the magnetic property of the magnet caused by heat generated during the casting of the hub, magnetization of the magnet must be carried out again after the aluminum die casting, resulting in a large increase in production cost. On the other hand, users require a reduction in production cost and the achievement of light weight. Therefore, molding of a hub to be used for a rotor core has been attempted using synthetic resin instead of aluminum die casting. There is then, however, another problem in that such synthetic resins are not suitable when the necessary strength to support a rotary shaft is to be obtained by lengthening the aforementioned tapered hole to more than the thickness of laminated layer of the rotor core, and by changing the position of said tapered hole in the direction of its axis. In addition, if a screw thread for fitting various heavy parts is to be formed in such a synthetic resin hub, or a tubular joining portion to which a cooling fan or the like is to be fitted is to be provided, this causes a problem in terms of strength in the same way as is described above.

According to the present invention there is provided a rotor comprising a rotor core having a pole piece portion with a magnet and a balance weight part disposed opposite to each other and a hub fitting hole located between them, and a metal hub for mounting the rotor to another part, the said hub being fixed in the said hub fitting hole, and at least the rotor core being coated with synthetic resin.

Thus in a preferred form the present invention provides a rotor of light weight with a fully protected rotor core, by limiting the use of metal components only to places where mechanical strength is specifically required and by coating other portions of the rotor core with synthetic resin.

An embodiment of the invention will now be described by way of example and with reference to the accompanying drawings, in which:-
FIG. 1 is a sectional view of a rotor taken along line A-A in FIG. 2; and
FIG. 2 is a perspective view of the rotor, illustrating a stage in the assembly thereof.

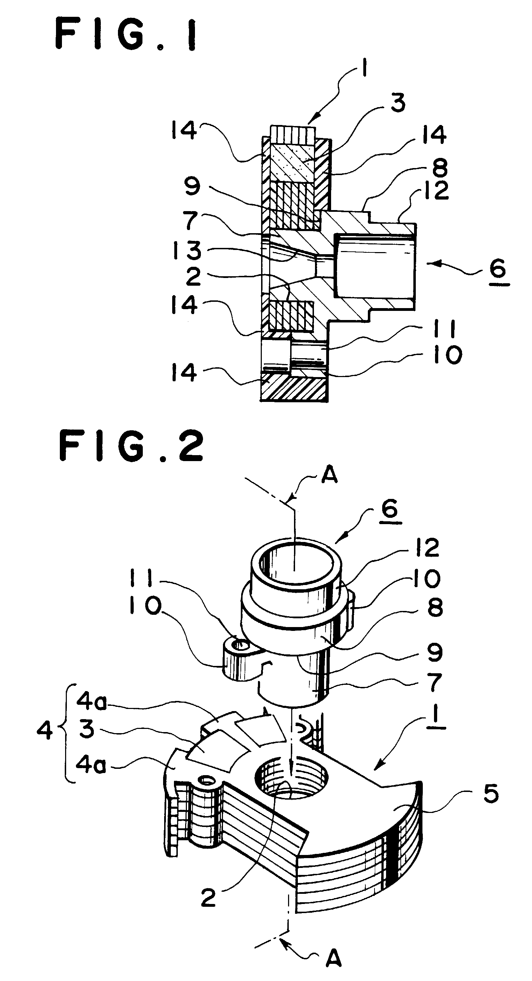

In this embodiment a rotor core 1 partially constitutes the rotor of a magneto to be used in the ignition system of an internal combustion engine. The illustrated rotor core 1 comprises a plurality of laminated magnetic plates joined together by rivetting, or may alternatively comprise molded parts of sintered magnetic alloy or the like. The rotor core 1 is substantially I-shaped as a whole and is so configured that a pole piece portion 4 having a magnet 3 is disposed opposite to a balance weight portion 5, with a hub fitting hole 2, to be described later in detail, located between them. The pole piece portion 4 has a pair of substantially T-shaped magnetic poles 4a which protrude in a manner such as to hold the said magnet 3 between them at one end of the rotor core 1. Thus the magnet 3 is supported and fixed in a recessed region of the magnetic poles 4a. 6 is a metal hub, made of aluminium, which has been molded by an aluminum die casting process, independently from the rotor core 1, and constitutes a part fitting portion. A tubular joining portion 7 at one end of the aluminum hub 6, having a smaller diameter than the body of the hub, is inserted by pressing, in the direction of the arrow in Fig. 2, into the hub fitting hole 2 of the rotor core 1, so that all of the parts are united together as a unit, as shown in Fig. 1.

The aluminum hub 6 has an annular shoulder 9 and a portion 8 of larger diameter, both being connected to said joining portion 7 and being in direct contact with the circumference of the hub fitting hole 2.

10 is a protruding portion in which a screw is received to connect the said portion 8 of larger diameter to the rotor core 1. The screw fitting portion 10, to which other parts may be fitted, has a length which is equal to half the thickness of the rotor core 1 where a screw hole 11 is formed. The screw hole 11 extends parallel to a central axis of the aluminum hub 6. 12 is a tubular portion to which other parts may be fitted, which is located at the other end of the aluminum hub and which is seen in Fig. 2 as the upper part of the hub. For example a cooling fan may be fitted to the tubular portion 12. Moreover a ratchet member for a recoil starter may be fixed to the portion 10 by means of a screw.

13 is a tapered hole formed centrally of the tubular joining portion 7. For example, a crankshaft of an internal combustion engine to be used as the rotating shaft of a generator may be inserted into this hole by pressing.

By inserting the tubular joining portion 7 of the aluminum hub 6 into the hub fitting hole 2 in such a manner that the lower face of screw receiving portion 10 of the hub contacts the side face of the rotor core 1 and subsequently, in a mold die, forming a synthetic resin coating 14 on the outer surface of the rotor core 1 except for the outer surface of the aluminum hub 6, using injection molding for example, a substantially circular plate-shaped rotor having excellent insulation, water-resistance and weather-resistance can be fabricated.

Thus a rotor having high strength, light weight and ease of production can be constructed by inserting, by pressing, an aluminum hub 6 produced by an aluminum die casting process, into a separately formed rotor core 1. This makes it possible for various parts of increased weight to be fitted to the aluminum hub 6. Additionally, by providing the rotor core 1 with a coating of synthetic resin 14 having a sufficient thickness, the mechanical, electrical and chemical durability of the rotor can be improved, and the rotor can be provided at reduced cost.

In the process of coating with synthetic resin 14, the magnet 3 is exposed to high temperature. However, because the temperature is much lower than that experienced during injection in conventional aluminum die casting, the magnetic strength of the magnet 3 is not reduced. Thus magnetization following molding is not required, thereby preventing degradation of quality and properties or increase in cost.

Thus, in the rotor of the present embodiment, the part fitting portion, which must be of metal, is provided as a whole by the aluminum hub 6 formed by aluminum die casting. On the other hand, the rotor core 1 comprising a laminated core is coated with synthetic resin 14. This provides protection for the rotor core itself and provides for a light weight product.

The selection of the length and/or position of the tapered portion of the tapered hole 13, or the screw receiving portion 10, can be performed arbitrarily and easily on the aluminum hub 6, independently from the production of the rotor core 1. Thus the occurrence of a loose fit or positional deviation of the aluminum hub 6 relative to the rotor core 1 can be prevented, thereby providing a rotor having high reliability at low cost.

By limiting the use of metal parts to the area where mechanical strength is specifically required in the rotor core, and by coating other parts of the rotor core with synthetic resin, the rotor is made light in weight as well as being sufficiently protected. Furthermore, a reduction of the magnetic force of the magnet at the pole piece portion can be prevented, and the fitting of various parts to the metal hub can be easily carried out. As a result, a reduction of product prices, production costs and light weight construction of the whole rotor can be realized.

## Claims

1. A rotor comprising a rotor core (1) having a pole piece portion (4) with a magnet (3) and a balance weight part (5) disposed opposite to each other and a hub fitting hole (2) located between them, and a metal hub (6) for mounting the rotor to another part, the said hub being fixed in the said hub fitting hole, and at least the rotor core being coated with synthetic resin (14).

2. A rotor as claimed in claim 1 wherein the said hub (6) has a tubular joining portion (7) for mounting the rotor to another part.

3. A rotor as claimed in claim 1 or 2, wherein the hub (6) has a screw fitting portion (10) for mounting other parts.

4. A rotor as claimed in any of claims 1 to 3, wherein the said hub (6) is formed by aluminum die casting.

5. A rotor as claimed in any preceding claim, wherein the said hub (6) is formed with a tapered central hole (13) for mounting the hub to another part.
